# EUROPÄISCHE PATENTSCHRIFT

(11) **EP 2 652 717 B1**
(45) Veröffentlichungstag und Bekanntmachung des Hinweises auf die Patenterteilung: **15.10.2014**
(21) Anmeldenummer: 11808163.7
(22) Anmeldetag: 06.12.2011
(51) Int. Cl.: B60L 11/14, B60W 10/06, G07C 5/08, G07C 5/00, B60W 20/00, B60W 10/08

(54) **VERFAHREN ZUR BESTIMMUNG EINES ZUSTANDS EINES VERBRENNUNGSMOTORS EINES FAHRZEUGS MIT WEITEREM MOTOR SOWIE ENTSPRECHENDE VORRICHTUNG UND FAHRZEUG**
METHOD FOR DETERMINING A STATE OF AN INTERNAL COMBUSTION ENGINE OF A VEHICLE WITH A FURTHER MOTOR AND CORRESPONDING DEVICE AND VEHICLE
PROCÉDÉ DE DÉTERMINATION DE L'ÉTAT D'UN MOTEUR À COMBUSTION INTERNE D'UN VÉHICULE ÉQUIPÉ D'UN MOTEUR ÉLECTRIQUE ADDITIONNEL, AINSI QUE DISPOSITIF CORRESPONDANT ET VÉHICULE

(30) Priorität: 15.12.2010 DE 102010054531
(43) Veröffentlichungstag der Anmeldung: 23.10.2013
(73) Patentinhaber: Volkswagen Aktiengesellschaft, 38436 Wolfsburg (DE)
(72) Erfinder: KUCHENBUCH, Kai, 38124 Braunschweig (DE); CRULL, Sven, 38124 Braunschweig (DE)
(86) Internationale Anmeldenummer: PCT/EP2011/006092
(87) Internationale Veröffentlichungsnummer: WO 2012/079716

(56) Entgegenhaltungen:
- DE-A1-102007 004 172
- DE-A1-102008 001 803
- DE-C1- 4 038 972
- US-A1- 2009 277 704
- US-B1- 7 259 664

## Beschreibung

Die vorliegende Erfindung betrifft ein Verfahren zur Bestimmung eines Zustands eines Verbrennungsmotors eines Fahrzeugs, wobei das Fahrzeug neben dem Verbrennungsmotor einen weiteren Motor, insbesondere einen Elektromotor, zum Antrieb des Fahrzeugs umfasst. Darüber hinaus betrifft die vorliegende Erfindung eine Vorrichtung zur Bestimmung des Züstands des Verbrennungsmotors sowie ein entsprechend ausgestaltetes Fahrzeug.

Die DE 197 09 445 B4 beschreibt ein Verfahren zur Ermittlung des Service-Intervalls für den Motorölwechsel bei Kraftfahrzeugen.

Die DE 102 57 793 A1 betrifft einen modellbasierten Lebensdauerbeobachter für die Berechnung der Restlebensdauer eines ausgewählten Bauteils.

Die DE 10 2008 049 754 A1 beschreibt ein Verfahren zur Verschleißdiagnose eines Kraftfahrzeugs, wobei im Rahmen der Verschleißdiagnose eine ganzheitliche Betrachtung des Fahrzeugs erfolgt.

Die EP 2 056 179 A2 betrifft ein Verfahren zur Schädigungsvorhersage von Bauteilen eines Kraftfahrzeugs

Die DE 11 2005 002 077 T5 beschreibt ein Verfahren zur Zustandserfassung einer Linearrollbewegungs-Führungsvorrichtung.

Im Dokument US 2009/0277704 A1 wird ein Hybridfahrzeug mit einem Antriebsstrang beschrieben, welcher elektromotorisch oder verbrennungsmotorisch betrieben werden kann. Zur Steuerung und Vorausberechnung von Wartungszeitpunkten werden Maße, insbesondere konkret die verstrichene Zeit oder die gefahrene Strecke, für die Betriebsdauer mittels des Elektromotors, mittels des Verbrennungsmotors und für die Gesamtbetriebsdauer berechnet.

Das Dokument US 7,259,664 betrifft eine sensorlose Kraftstoffniveauermittlung und eine sensorlose Ölwechselanzeige für eine Elektrofahrzeug mit Range Extender. Das Kraftstoffniveau wird ausgehend von der erzeugten Leistung berechnet. Eine Notwendigkeit für einen Ölwechsel wird angezeigt, wenn die Anzahl der Motorumdrehungen einen Grenzwert überschreitet.

Im Dokument DE 40 38 972 C1 ist eine Vorrichtung zur Berechung eines Kraftfahrzeug-Wartungsintervalls anhand verschiedener erfasster oder ermittelter Betriebswerte offenbart. Unter anderem werden die Anzahl der Starts, Kurbelwellenumdrehungen, Motoröldruck, ladeluftdruck, Ölverbrauch und Kraftstoffvebrauch betrachtet.

Bei Fahrzeugen, welche neben einem Verbrennungsmotor einen weiteren Motor (beispielsweise einen Elektromotor) zum Antrieb des Fahrzeugs aufweisen, entspricht die Betriebszeit des Verbrennungsmotors nicht mehr der Betriebszeit des Fahrzeugs. Die vorliegende Erfindung stellt sich die Aufgabe, diesen Umstand beispielsweise zur Abschätzung der Lebensdauer des Verbrennungsmotors oder zur Abschätzung der Wartungshäufigkeit des Verbrennungsmotors zu berücksichtigen.

Erfindungsgemäß wird diese Aufgabe durch ein Verfahren zur Bestimmung eines Zustands eines Verbrennungsmotors nach Anspruch 1, durch eine Vorrichtung zur Bestimmung eines Zustands eines Verbrennungsmotors nach Anspruch 9 und durch ein Fahrzeug nach Anspruch 11 gelöst. Die abhängigen Ansprüche definieren bevorzugte und vorteilhafte Ausführungsformen der vorliegenden Erfindung.

Im Rahmen der vorliegenden Erfindung wird ein Verfahren zur Bestimmung eines Zustands eines Verbrennungsmotors (einer Verbrennungskraftmaschine) eines Fahrzeugs bereitgestellt. Dabei umfasst das Fahrzeug neben dem Verbrennungsmotor zum Antrieb des Fahrzeugs einen weiteren Motor, insbesondere einen Elektromotor. Zur Bestimmung des Zustands wird mindestens eine Messgröße aus einer Gruppe erfasst, wobei die Gruppe folgende Messgrößen aufweist:
- Eine gefahrene Gesamtstrecke des Fahrzeugs. Diese Messgröße gibt an, wie viele Kilometer das Fahrzeug mit im Betrieb befindlichen Verbrennungsmotor gefahren ist.
- Eine weitere gefahrene Gesamtstrecke des Fahrzeugs, welche diejenigen Fahrstrecken des Fahrzeugs aufsummiert, die das Fahrzeug mit aktiviertem bzw. eingeschaltetem Verbrennungsmotor fährt. Die weitere Gesamtstrecke ist also maximal genauso groß wie die Gesamtstrecke, in der Regel aber kleiner, da das Fahrzeug nicht immer mit eingeschaltetem Verbrennungsmotor fährt.
- Eine Anzahl von Starts des Verbrennungsmotors. Jedes Mal, wenn der Verbrennungsmotor in Betrieb genommen wird, wird beispielsweise ein entsprechender Zähler inkrementiert. Da das Fahrzeug auch nur mit Hilfe des weiteren Motors angetrieben werden kann, stimmt die Anzahl der Starts des Verbrennungsmotors in der Regel nicht mit der Anzahl der Fahrtantritte mit dem Fahrzeug überein. Während einer Fahrt mit dem Fahrzeug kann der Verbrennungsmotor überhaupt nicht oder mehrfach gestartet werden, wobei das Fahrzeug in den Phasen, in welchen der Verbrennungsmotor nicht läuft, allein durch den weiteren Motor angetrieben wird.
- Eine jeweilige Betriebsdauer des Verbrennungsmotors pro Start des Verbrennungsmotors. Insbesondere für jeden Betrieb des Verbrennungsmotors wird die Dauer dieses Betriebs gemessen und abgespeichert.
- Eine Öltemperatur pro Start des Verbrennungsmotors. Beispielsweise zum Zeitpunkt jedes Starts des Verbrennungsmotors wird die Temperatur des Öls in dem Verbrennungsmotor bestimmt und gespeichert.
- Eine Öltemperatur pro Stopp des Verbrennungsmotors. Beispielsweise jeweils zum Zeitpunkt einer Beendigung des Betriebs des Verbrennungsmotors wird die Temperatur des Öls in dem Verbrennungsmotor bestimmt und gespeichert.
- Eine Wassertemperatur pro Start des Verbrennungsmotors. Beispielsweise jeweils zum Zeitpunkt des Starts des Verbrennungsmotors wird die Temperatur des Kühlwassers des Verbrennungsmotors bestimmt und gespeichert.
- Eine Wassertemperatur pro Stopp des Verbrennungsmotors. Beispielsweise jeweils zum Zeitpunkt einer Beendigung des Betriebs des Verbrennungsmotors wird die Temperatur des Kühlwassers des Verbrennungsmotors bestimmt und gespeichert.
- Einen Ölstand in dem Verbrennungsmotor. Über den Ölstand wird jeweils die Ölmenge innerhalb des Verbrennungsmotors insbesondere zu vorbestimmten Zeitpunkten (beispielsweise periodisch oder in vorbestimmten Phasen (z.B. bei Beginn) jeder Fahrt) bestimmt und gespeichert.
- Eine Drehzahl und ein Lastniveau des Verbrennungsmotors. Abhängig von der Motortemperatur wird der Zustand des Verbrennungsmotors mehr oder weniger von der Drehzahl und dem Lastniveau bestimmt. Insbesondere bei kalten Temperaturen, wenn die Motortemperatur unterhalb eines vorbestimmten Schwellenwerts (z.B. 80°, abhängig vom Typ des Verbrennungsmotors) liegt, wird jeweils die Drehzahl und das Lastniveau des Verbrennungsmotors bestimmt und gespeichert, wobei insbesondere Maximalwerte der Drehzahl und des Lastniveaus von Interesse sind.
   Gemäß einer erfindungsgemäßen Ausführungsform tragen die Drehzahl und das Lastniveau mit einer ersten Gewichtung zur Bestimmung des Zustands bei, wenn eine Motortemperatur unterhalb des vorbestimmten Schwellenwerts liegt. Wenn die Motortemperatur oberhalb des vorbestimmten Schwellenwerts liegt, tragen die Drehzahl und das Lastniveau mit einer zweiten Gewichtung zur Bestimmung des Zustands bei, welche geringer als die erste Gewichtung ist. Dabei entspricht der Zustand einer verstärkten Alterung oder Schädigung des Motors, so dass ein höherer Zahlenwert für den Zustand einer entsprechend höheren Alterung oder Schädigung des Motors entspricht. Eine höhere Gewichtung führt dazu, dass eine Belastung des Verbrennungsmotors durch eine bestimmte Drehzahl oder ein bestimmtes Lastniveau bei geringen Motortemperaturen (unterhalb des vorbestimmten Schwellenwerts) den Zustand des Motors stärker negativ beeinflusst als bei höheren Motortemperaturen (oberhalb des vorbestimmten Schwellenwerts).
- Einen Schadstoffanteil im Öl des Verbrennungsmotors. Insbesondere mittels eines Kennfeldes wird beispielsweise abhängig von einer Motortemperatur und einer Last des Verbrennungsmotors ein Rußanteil im Verbrennungsraum (Zylinder) des Verbrennungsmotors bestimmt, woraus sich dann über das Kennfeld die Ölqualität bzw. der Schadstoffanteil des Verbrennungsmotors bestimmen lässt. Dieser Schadstoffanteil wird insbesondere jeweils zu vorbestimmten Zeitpunkten (beispielsweise periodisch oder in vorbestimmten Phasen (zum Beispiel bei Beginn) jeder Fahrt) bestimmt und gespeichert.
- Werte einer Beschleunigung, welcher das Fahrzeug ausgesetzt ist. Insbesondere periodisch oder jeweils wenn die Beschleunigung oberhalb eines vorbestimmten Grenzwert liegt, werden die Beschleunigungswerte gespeichert.

Unter einem Verbrennungsmotor wird im Rahmen der vorliegenden Erfindung ein Verbrennungsmotor verstanden, welcher zumindest indirekt zum Antrieb des Fahrzeugs beiträgt. D.h., der Verbrennungsmotor kann entweder ein Drehmoment erzeugen, welches mit Hilfe eines Getriebes direkt zum Antrieb des Fahrzeugs eingesetzt wird, oder der Verbrennungsmotor kann ein Drehmoment erzeugen, welches in elektrische Energie umgesetzt wird, mit welcher dann mittels eines Elektromotors ein Drehmoment zum Antrieb des Fahrzeugs erzeugt wird. Auch Mischformen dieser beiden Varianten liegen im Rahmen der vorliegenden Erfindung. Verbrennungsmotoren in Plug-In-Hybrid-Fahrzeugen und Range-Extender-Fahrzeugen sind Beispiele für Verbrennungsmotoren im Rahmen der vorliegenden Erfindung.

Da im rein elektrischen Kurz- und Mittelstreckenbetrieb des Fahrzeugs eine hohe Kilometerleistung auch ohne Zuhilfenahme des Verbrennungsmotors zustande kommen kann, ist die Fahrzeugbetriebsdauer (beispielsweise der Kilometerstand des Fahrzeugs) nicht länger die ausschlaggebende Kenngröße, um eine Aussage über die bereits erfolgte Beanspruchung oder die noch zu erwartende Lebensdauer des Verbrennungsmotors treffen zu können. Mit Hilfe der vorab beschriebenen Messgrößen kann der Zustand des Verbrennungsmotors auch in diesem Fall (dass die Fahrzeugbetriebsdauer nicht der Betriebsdauer des Verbrennungsmotors entspricht) vorteilhafterweise sehr genau bestimmt werden.

Erfindungsgemäß kann abhängig von dem Zustand des Verbrennungsmotors auch eine Belastung des Verbrennungsmotors aufgrund einer aktuell vorhandenen Schmierung des Verbrennungsmotors bestimmt werden. Für den Fall, dass die Belastung des Verbrennungsmotors über einem vorbestimmten Schwellenwert liegt, kann dann der Verbrennungsmotor für eine Zeitdauer gestartet werden, welche ausreicht, dass die Belastung des Verbrennungsmotors aufgrund der durch den Betrieb des Verbrennungsmotors über die Zeitdauer hinweg erzeugte Schmierung unter einem weiteren vorbestimmten Schwellenwert liegt. Dabei ist der weitere Schwellenwert unterhalb des vorher genannten Schwellenwerts angesiedelt.

Da der Motor im elektrischen Fahrbetrieb nicht geschmiert wird (da kein Öldruck vorhanden ist), kann es aufgrund der schwingenden Belastung des Verbrennungsmotors während der Fahrt des Fahrzeugs zu Schäden kommen, welchen durch einen regelmäßig ausgelösten Zwangsbetrieb des Verbrennungsmotors entgegengewirkt werden kann. Zu diesem Zweck dienen beispielsweise vorab beschriebene Messgrößen, mit welchen die Beschleunigungswerte, welchen das Fahrzeug bei einer Fahrt ausgesetzt ist, bestimmt werden. Für den Fall, dass die Belastung des Verbrennungsmotors aufgrund der nicht vorhandenen oder der sich mit der Zeit vermindernden Schmierung und/oder aufgrund der Beschleunigung des Fahrzeugs über dem vorbestimmten Schwellenwert liegt, wird der Verbrennungsmotor vorteilhafterweise über die Zeitdauer hinweg gestartet, um dadurch den Öldruck aufzubauen und für eine entsprechende Schmierung zu sorgen. Die Zeitdauer ist so bemessen, dass die Belastung des Verbrennungsmotors durch die erzeugte Schmierung z.B. bei gleichbleibender Belastung aufgrund der Beschleunigung unter dem weiteren vorbestimmten Schwellenwert liegt, also deutlich geringer als vor der Aktivierung des Verbrennungsmotors ist. Anders ausgedrückt ist die Zeitdauer derart bemessen, dass der Verbrennungsmotor in dieser Zeitdauer ausreichend geschmiert wird.

Abhängig von dem erfindungsgemäß bestimmten Zustand des Verbrennungsmotors kann zum einen der nächste Zeitpunkt für eine Wartung des Verbrennungsmotors bestimmt werden. Darüber hinaus kann abhängig von diesem Zustand ein Restverkaufswert des Verbrennungsmotors bestimmt werden.

Damit sorgt die vorliegende Erfindung vorteilhafterweise für einen Wettbewerbsvorteil aufgrund im Vergleich zum Stand der Technik längeren Wartungsintervallen oder aufgrund eines nachweislich (der Beweis erfolgt z.B. durch die gespeicherten Messgrößen) erhöhten Restverkaufswerts und damit Wiederverkaufswerts des Verbrennungsmotors.

Die vorab beschriebenen Messgrößen können zumindest teilweise, aber auch vollständig (d.h. jede irgendwann erfasste Messgröße) in einem Speicher gespeichert werden. Mittels eines Vorhersagemodells (z.B. eines Modells zur Vorhersage einer Alterung des Verbrennungsmotors) und diesen in dem Speicher gespeicherten Messwerten kann dann der Zustand des Verbrennungsmotors (zum Beispiel der Zeitpunkt für die nächste Wartung des Verbrennungsmotors oder der Restverkaufswert des Verbrennungsmotors) bestimmt werden.

Dadurch können die Wartungsintervalle flexibel an die tatsächlichen Belastungen und/oder Betriebszeiten des Verrennungsmotors angepasst werden.

Des Weiteren ist es möglich, dass die erfassten Messwerte zumindest teilweise von einem Benutzer, beispielsweise dem Fahrer des Fahrzeugs, abgerufen werden können.

Dadurch ist der Fahrer des Fahrzeugs beispielsweise in der Lage, die Gesamtstrecke des Fahrzeugs, über welcher das Fahrzeug mit Hilfe des Verbrennungsmotors angetrieben worden ist, bzw. die verbrennungsmotorisch zurückgelegten Kilometer selbstständig abzurufen.

Im Rahmen der vorliegenden Erfindung wird auch eine Vorrichtung zur Bestimmung eines Zustands eines Verbrennungsmotors eines Fahrzeugs bereitgestellt. Wie bei dem erfindungsgemäßen Verfahren umfasst das Fahrzeug zum Antrieb des Fahrzeugs einen weiteren Motor, insbesondere einen Elektromotor. Die Vorrichtung umfasst eine Steuerung, mindestens eine Erfassungsvorrichtung und einen Speicher. Mit Hilfe der mindestens einen Erfassungsvorrichtung kann mindestens eine Messgröße aus der vorab beschriebenen Gruppe von Messgrößen erfasst werden. Die Vorrichtung speichert die eine oder die mehreren Messgrößen in dem Speicher und bestimmt mittels der Steuerung den Zustand in Abhängigkeit von der oder den Messgrößen.

Die Vorteile der erfindungsgemäßen Vorrichtung entsprechen im Wesentlichen den Vorteilen des erfindungsgemäßen Verfahrens, welche vorab im Detail ausgeführt worden sind, so dass hier eine Wiederholung verzichtet wird.

Im Rahmen der vorliegenden Erfindung wird schließlich auch ein Fahrzeug mit einem Verbrennungsmotor, mit einem weiteren Motor (insbesondere einem Elektromotor) zum Antrieb des Fahrzeugs und mit einer erfindungsgemäßen Vorrichtung bereitgestellt.

Die vorliegende Erfindung eignet sich insbesondere für Hybrid-Fahrzeuge (zum Beispiel Plug-In-Hybrid-Fahrzeuge) und für Range-Extender-Fahrzeuge, welche einen so genannten seriell angeordneten Hybridantrieb umfassen, bei welchem der Verbrennungsmotor nur zum Aufladen eines Energiespeichers ausgelegt ist, welcher den Elektromotor mit elektrischer Energie versorgt. Selbstverständlich ist die vorliegende Erfindung nicht auf diesen bevorzugten Anwendungsbereich eingeschränkt, da die vorliegende Erfindung bei allen Antrieben eingesetzt werden kann, welche neben einem Verbrennungsmotor einen weiteren Motor umfassen, wobei dieser Antrieb auch bei Schiffen, Flugzeugen sowie gleisgebundenen oder spurgeführten Fahrzeugen einsetzbar ist. Darüber hinaus kann die vorliegende Erfindung auch bei Fahrzeugen eingesetzt werden, welche nur mittels des Verbrennungsmotors angetrieben werden, also keinen weiteren Motor zum Antrieb des Fahrzeugs umfassen, um den Zustand des Verbrennungsmotors abhängig von den erfassten Messgrößen zu bestimmen.

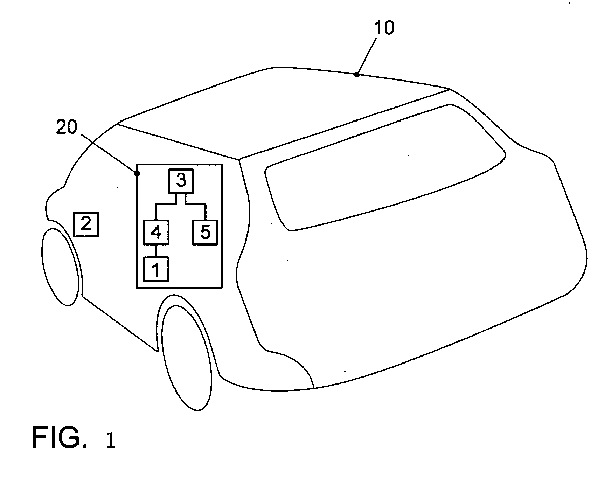

Im Folgenden wird die vorliegende Erfindung anhand bevorzugter erfindungsgemäßer Ausführungsformen mit Bezug zu der einzigen Figur im Detail beschrieben.

Die einzige Figur stellt schematisch ein erfindungsgemäßes Fahrzeug mit einer erfindungsgemäßen Vorrichtung dar.

Die einzige Figur stellt schematisch ein erfindungsgemäßes Fahrzeug 10 dar, welches seinerseits einen Elektromotor 1 und eine erfindungsgemäße Vorrichtung 20 umfasst. In der Regel umfasst das Fahrzeug auch einen Energiespeicher (nicht dargestellt), aus welchem der Elektromotor seine Energie zum Antrieb des Fahrzeugs 10 bezieht. Die erfindungsgemäße Vorrichtung 20 weist eine Steuerung 3, eine Erfassungsvorrichtung 4, einen Speicher 5 und einen Verbrennungsmotor 1 auf. Mit Hilfe der Erfassungsvorrichtung 4 werden Messgrößen des Verbrennungsmotors 1 erfasst und in dem Speicher 5 gespeichert. Abhängig von diesen Messgrößen bestimmt die Steuerung 3 jeweils einen aktuellen Zustand des Verbrennungsmotors 1.

## Patentansprüche

1. Verfahren zur Bestimmung eines Zustands eines Verbrennungsmotors (1) eines Fahrzeugs (10),
wobei das Fahrzeug (10) zum Antrieb des Fahrzeugs (10) einen weiteren Motor (2) umfasst, wobei eine gefahrene Gesamtstrecke des Fahrzeugs (10) und eine weitere gefahrene Gesamtstrecke des Fahrzeugs (10), während welcher der Verbrennungsmotor im Betrieb ist, erfasst wird,
**dadurch gekennzeichnet,**
**dass** eine Anzahl von Starts des Verbrennungsmotors (1) und mindestens eine weitere Messgröße aus einer Gruppe erfasst werden,
wobei die Gruppe umfasst
• eine Betriebsdauer des Verbrennungsmotors (1) pro Start des Verbrennungsmotors (1),
• eine Öltemperatur pro Start des Verbrennungsmotors (1),
• eine Öltemperatur pro Stopp des Verbrennungsmotors (1),
• eine Wassertemperatur pro Start des Verbrennungsmotors (1),
• eine Wassertemperatur pro Stopp des Verbrennungsmotors (1),
• einen Ölstand in dem Verbrennungsmotor (1),
• eine Drehzahl und ein Lastniveau des Verbrennungsmotors (1),
• einen Schadstoffanteil im Öl des Verbrennungsmotors (1), und
• Werte einer Beschleunigung, welcher das Fahrzeug (1) ausgesetzt ist, und
wobei der Zustand abhängig von den Messgrößen bestimmt wird.

2. Verfahren nach Anspruch 1, **dadurch gekennzeichnet, dass** der weitere Motor ein Elektromotor (2) ist.

3. Verfahren nach Anspruch 1 oder 2,
**dadurch gekennzeichnet,**
**dass** abhängig von dem Zustand eine Belastung des Verbrennungsmotors (1) aufgrund einer aktuell vorhandenen Schmierung des Verbrennungsmotors (1) bestimmt wird, und dass für den Fall, dass die Belastung über einem Schwellenwert liegt, der Verbrennungsmotor (1) für eine Zeitdauer gestartet wird, welche ausreicht, dass die Belastung des Verbrennungsmotors (1) aufgrund der durch einen Betrieb des Verbrennungsmotors (1) über die Zeitdauer hinweg erzeugten Schmierung unter einem weiteren vorbestimmten Schwellenwert liegt, welcher unterhalb des Schwellenwerts liegt.

4. Verfahren nach einem der vorhergehenden Ansprüche, **dadurch gekennzeichnet, dass** abhängig von dem Zustand ein nächster Zeitpunkt für eine Wartung des Verbrennungsmotors (1) bestimmt wird.

5. Verfahren nach einem der vorhergehenden Ansprüche, **dadurch gekennzeichnet, dass** abhängig von dem Zustand ein Restverkaufswert des Verbrennungsmotors (1) bestimmt wird.

6. Verfahren nach einem der vorhergehenden Ansprüche,
**dadurch gekennzeichnet,**
**dass** der mindestens eine Messwert in einem Speicher (5) gespeichert wird,
**dass** mittels eines Vorhersagemodells und dem in dem Speicher (5) gespeicherten mindestens einen Messwert der Zustand bestimmt wird.

7. Verfahren nach einem der vorhergehenden Ansprüche, **dadurch gekennzeichnet, dass** der mindestens eine Messwert von einem Benutzer abrufbar ist.

8. Verfahren nach einem der vorhergehenden Ansprüche,
**dadurch gekennzeichnet,**
**dass** die Drehzahl und das Lastniveau des Verbrennungsmotors (1) mit einer ersten Gewichtung zur Bestimmung des Zustands beitragen, wenn eine Temperatur des Verbrennungsmotors (1) bei einem Betrieb des Verbrennungsmotors (1) unterhalb einer vorbestimmten Schwellentemperatur liegt,
**dass** die Drehzahl und das Lastniveau des Verbrennungsmotors (1) mit einer zweiten Gewichtung zur Bestimmung des Zustands beitragen, wenn die Temperatur des Verbrennungsmotors (1) bei einem Betrieb des Verbrennungsmotors (1) oberhalb der vorbestimmten Schwellentemperatur liegt, und
**dass** die erste Gewichtung größer als die zweite Gewichtung ist.

9. Vorrichtung zur Bestimmung eines Zustands eines Verbrennungsmotors (1) eines Fahrzeugs (10),
wobei das Fahrzeug (10) zum Antrieb des Fahrzeugs (10) einen weiteren Motor (2) umfasst,
wobei die Vorrichtung (20) eine Steuerung (3), mindestens eine Erfassungsvorrichtung (4) und einen Speicher (5) umfasst,
wobei die mindestens eine Erfassungsvorrichtung (4) zum Erfassen einer gefahrenen Gesamtstrecke des Fahrzeugs (10) und einer weiteren gefahrenen Gesamtstrecke des Fahrzeugs, während welcher der Verbrennungsmotor im Betrieb ist, ausgestaltet ist, **dadurch gekennzeichnet,**
**dass** die mindestens eine Erfassungsvorrichtung (4) zum Erfassen eine Anzahl von Starts des Verbrennungsmotors (1) und mindestens einer weiteren Messgröße aus einer Gruppe ausgestaltet ist,
wobei die Gruppe umfasst
• eine Betriebsdauer des Verbrennungsmotors (1) pro Start des Verbrennungsmotors (1),
• eine Öltemperatur pro Start des Verbrennungsmotors (1),
• eine Öltemperatur pro Stopp des Verbrennungsmotors (1),
• eine Wassertemperatur pro Start des Verbrennungsmotors (1),
• eine Wassertemperatur pro Stopp des Verbrennungsmotors (1),
• einen Ölstand in dem Verbrennungsmotor (1),
• eine Drehzahl und ein Lastniveau des Verbrennungsmotors (1), wenn eine Temperatur des Verbrennungsmotors (1) bei einem Betrieb des Verbrennungsmotors (1) unterhalb einer vorbestimmten Schwellentemperatur liegt,
• einen Schadstoffanteil im Öl des Verbrennungsmotors (1), und
• Werte einer Beschleunigung, welcher das Fahrzeug (10) ausgesetzt ist,
wobei die Vorrichtung (20) die mindestens eine Messgröße in dem Speicher (5) speichert, und
wobei die Steuerung (3) den Zustand abhängig von den Messgrößen bestimmt.

10. Vorrichtung nach Anspruch 9, **dadurch gekennzeichnet, dass** die Vorrichtung (20) zur Durchführung des Verfahrens nach einem der Ansprüche 1-8 ausgestaltet ist.

11. Fahrzeug mit einem Verbrennungsmotor (1), einem Elektromotor (2) zum Antrieb des Fahrzeugs (10) und einer Vorrichtung (20) nach Anspruch 9 oder 10.

## Claims

1. Method for determining a state of an internal combustion engine (1) of a vehicle (10),
wherein the vehicle (10) comprises a further motor (2) for driving the vehicle (10), wherein a total distance travelled by the vehicle (10) and a further total distance travelled by the vehicle (10) during which the internal combustion engine is operating are detected,
**characterized**
**in that** a number of starts of the internal combustion engine (1) and at least one further measurement variable are detected from a group, wherein the group comprises
• an operating period of the internal combustion engine (1) per start of the internal combustion engine (1),
• an oil temperature per start of the internal combustion engine (1),
• an oil temperature per stop of the internal combustion engine (1),
• a water temperature per start of the internal combustion engine (1),
• a water temperature per stop of the internal combustion engine (1),
• an oil level in the internal combustion engine (1),
• a rotational speed and a load level of the internal combustion engine (1),
• a portion of pollutants in the oil of the internal combustion engine (1), and
• values of an acceleration to which the vehicle (10) is subjected, and
wherein the state is determined as a function of the measurement variables.

2. Method according to Claim 1, **characterized in that** the further motor is an electric motor (2).

3. Method according to Claim 1 or 2,
**characterized**
**in that** a load of the internal combustion engine (1) is determined as a function of the state on the basis of a currently present lubrication of the internal combustion engine (1), and in that in the event of the load being above a threshold value the internal combustion engine (1) is started for a period which is sufficient for the load of the internal combustion engine (1) to be below a further predetermined threshold value on the basis of the lubrication generated by operation of the internal combustion engine (1) over the time period, which threshold value is below the threshold value.

4. Method according to one of the preceding claims,
**characterized in that** a subsequent time for maintenance of the internal combustion engine (1) is determined as a function of the state.

5. Method according to one of the preceding claims,
**characterized in that** a residual sale value of the internal combustion engine (1) is determined as a function of the state.

6. Method according to one of the preceding claims,
**characterized**
**in that** the at least one measured value is stored in a memory (5),
**in that** the state is determined by means of a prediction model and the at least one measured value stored in the memory (5).

7. Method according to one of the preceding claims,
**characterized in that** the at least one measured value can be called by a user.

8. Method according to one of the preceding claims,
**characterized**
**in that** the rotational speed and the load level of the internal combustion engine (1) contribute, with a first weighting, to the determination of the state, if a temperature of the internal combustion engine (1) is below a predetermined threshold value during operation of the internal combustion engine (1),
**in that** the rotational speed and the load level of the internal combustion engine (1) contribute, with a second weighting, to the determination of the state if the temperature of the internal combustion engine (1) is above the predetermined threshold temperature during operation of the
internal combustion engine (1), and
**in that** the first weighting is higher than the second weighting.

9. Device for determining a state of an internal combustion engine (1) of a vehicle (10),
wherein the vehicle (10) comprises a further motor (2) for driving the vehicle (10),
wherein the device (20) comprises a controller (3), at least one detection device (4) and a memory (5),
wherein the at least one detection device (4) is designed to detect a total distance travelled by the vehicle (10) and a further total distance travelled by the vehicle during which the internal combustion engine is operating,
**characterized**
**in that** the at least one detection device (4) is configured to detect a number of starts of the internal combustion engine (1) and at least one further measurement variable from a group,
wherein the group comprises
• an operating period of the internal combustion engine (1) per start of the internal combustion engine (1),
• an oil temperature per start of the internal combustion engine (1),
• an oil temperature per stop of the internal combustion engine (1),
• a water temperature per start of the internal combustion engine (1),
• a water temperature per stop of the internal combustion engine (1),
• an oil level in the internal combustion engine (1),
• a rotational speed and a load level of the internal combustion engine (1) if a temperature of the internal combustion engine (1) is below a predetermined threshold temperature during operation of the internal combustion engine (1),
• a portion of pollutants in the oil of the internal combustion engine (1), and
• values of an acceleration to which the vehicle (10) is subjected,
wherein the device (20) stores the at least one measurement variable in the memory (5),
and
wherein the controller (3) determines the state as a function of the measurement variables.

10. Device according to Claim 9, **characterized in that** the device (20) is configured to carry out the method according to one of Claims 1-8.

11. Vehicle having an internal combustion engine (1), an electric motor (2) for driving the vehicle (10) and a device (20) according to Claim 9 or 10.

## Revendications

1. Procédé pour déterminer un état d'un moteur à combustion (1) d'un véhicule (10), le véhicule (10) comprenant un moteur supplémentaire (2) pour la propulsion du véhicule (10), un trajet total parcouru du véhicule (10) et un trajet total parcouru supplémentaire du véhicule (10) pendant lequel le moteur à combustion est en fonctionnement étant relevés,
**caractérisé en ce**
**qu'**une pluralité de démarrages du moteur à combustion (1) et au moins une grandeur de mesure supplémentaire d'un groupe sont relevés,
le groupe comprenant
* une durée de fonctionnement du moteur à combustion (1) par démarrage du moteur à combustion (1),
* une température d'huile par démarrage du moteur à combustion (1),
* une température d'huile par arrêt du moteur à combustion (1),
* une température d'eau par démarrage du moteur à combustion (1),
* une température d'eau par arrêt du moteur à combustion (1),
* un niveau d'huile dans le moteur à combustion (1),
* une vitesse de rotation et un niveau de charge du moteur à combustion (1),
* une proportion de polluants dans l'huile du moteur à combustion (1), et
* les valeurs d'une accélération à laquelle est soumis le véhicule (1) et l'état étant déterminé en fonction des grandeurs de mesure.

2. Procédé selon la revendication 1, **caractérisé en ce que** le moteur supplémentaire est un moteur électrique (2).

3. Procédé selon la revendication 1 ou 2, **caractérisé en ce qu'**une charge du moteur à combustion (1) est déterminée sur la base d'une lubrification actuellement présente du moteur à combustion (1) en fonction de l'état et **en ce que** dans le cas où la charge est supérieure à une valeur de seuil, le moteur à combustion (1) est démarré pendant une durée qui est suffisante pour que la charge du moteur à combustion (1), sur la base de la lubrification générée sur la durée par le fonctionnement du moteur à combustion (1), se trouve au-dessous d'une autre valeur de seuil prédéfinie, laquelle est inférieure à la valeur de seuil.

4. Procédé selon l'une des revendications précédentes, **caractérisé en ce qu'**une prochaine échéance d'entretien du moteur à combustion (1) est déterminée en fonction de l'état.

5. Procédé selon l'une des revendications précédentes, **caractérisé en ce qu'**une valeur marchande résiduelle du moteur à combustion (1) est déterminée en fonction de l'état.

6. Procédé selon l'une des revendications précédentes, **caractérisé en ce que** l'au moins une valeur mesurée est enregistrée dans une mémoire (5), **en ce qu'**une valeur mesurée de l'état est déterminée au moyen d'un modèle de prévision et de l'au moins une valeur mesurée enregistrée dans la mémoire (5).

7. Procédé selon l'une des revendications précédentes, **caractérisé en ce que** l'au moins une valeur mesurée peut être interrogée par un utilisateur.

8. Procédé selon l'une des revendications précédentes, **caractérisé en ce**
**que** la vitesse de rotation et le niveau de charge du moteur à combustion (1) contribuent avec une première pondération à la détermination de l'état lorsqu'une température du moteur à combustion (1), lors d'un fonctionnement du moteur à combustion (1), se trouve au-dessous d'une température de seuil prédéfinie,
**que** la vitesse de rotation et le niveau de charge du moteur à combustion (1) contribuent avec une deuxième pondération à la détermination de l'état lorsque la température du moteur à combustion (1), lors d'un fonctionnement du moteur à combustion (1), se trouve au-dessus de la température de seuil prédéfinie, et
**que** la première pondération est supérieure à la deuxième pondération.

9. Dispositif pour déterminer un état d'un moteur à combustion (1) d'un véhicule (10), le véhicule (10) comprenant un moteur supplémentaire (2) pour la propulsion du véhicule (10), le dispositif (20) comprenant une commande (3), au moins un dispositif d'acquisition (4) et une mémoire (5), l'au moins un dispositif d'acquisition (4) étant configuré pour relever un trajet total parcouru du véhicule (10) et un trajet total parcouru supplémentaire du véhicule pendant lequel le moteur à combustion est en fonctionnement,
**caractérisé en ce**
**que** l'au moins un dispositif d'acquisition (4) est configuré pour relever une pluralité de démarrages du moteur à combustion (1) et au moins une grandeur de mesure supplémentaire d'un groupe,
le groupe comprenant
* une durée de fonctionnement du moteur à combustion (1) par démarrage du moteur à combustion (1),
* une température d'huile par démarrage du moteur à combustion (1),
* une température d'huile par arrêt du moteur à combustion (1),
* une température d'eau par démarrage du moteur à combustion (1),
* une température d'eau par arrêt du moteur à combustion (1),
* un niveau d'huile dans le moteur à combustion (1),
* une vitesse de rotation et un niveau de charge du moteur à combustion (1), lorsqu'une température du moteur à combustion (1) lors d'un fonctionnement du moteur à combustion (1) se trouve au-dessous d'une température de seuil prédéfinie,
* une proportion de polluants dans l'huile du moteur à combustion (1), et
* les valeurs d'une accélération à laquelle est soumis le véhicule (10),
le dispositif (20) enregistrant l'au moins une grandeur de mesure dans la mémoire (5) et
la commande (3) déterminant l'état en fonction des grandeurs de mesure.

10. Dispositif selon la revendication 9, **caractérisé en ce que** le dispositif (20) est configuré pour mettre en oeuvre le procédé selon l'une des revendications 1 à 8.

11. Véhicule équipé d'un moteur à combustion (1), d'un moteur électrique (2) pour la propulsion du véhicule (10) et d'un dispositif (20) selon la revendication 9 ou 10.
